# EUROPÄISCHE PATENTSCHRIFT

(11) **EP 1 322 987 B1**
(45) Veröffentlichungstag und Bekanntmachung des Hinweises auf die Patenterteilung: **29.03.2006**
(21) Anmeldenummer: 01986355.4
(22) Anmeldetag: 02.10.2001
(51) Int. Cl.: G02B 21/00

(54) **SCHUTZVORRICHTUNG GEGEN FEUCHTIGKEITSEINTRITT FÜR EIN INVERSES MIKROSKOP**
DEVICE FOR PROTECTING AGAINST HUMIDITY IN AN INVERTED MICROSCOPE
DISPOSITIF DE PROTECTION CONTRE L'ENTREE D'HUMIDITE POUR MICROSCOPE INVERSE

(30) Priorität: 06.10.2000 DE 10050825
(43) Veröffentlichungstag der Anmeldung: 02.07.2003
(73) Patentinhaber: CARL ZEISS JENA GmbH, 07745 Jena (DE)
(72) Erfinder: DIETZSCH, Leander, 07743 Jena (DE); GONSCHOR, Matthias, 37130 Gleichen (DE); FALTERMEIER, Bernd, 73431 Aalen (DE); VON DER GATHEN, Barbara, 73432 Aalen (DE)
(86) Internationale Anmeldenummer: PCT/EP2001/011379
(87) Internationale Veröffentlichungsnummer: WO 2002/029469

(56) Entgegenhaltungen:
- PATENT ABSTRACTS OF JAPAN vol. 018, no. 567 (P-1820), 28. Oktober 1994 (1994-10-28) -& JP 06 208058 A (OLYMPUS OPTICAL CO LTD), 26. Juli 1994 (1994-07-26)
- PATENT ABSTRACTS OF JAPAN vol. 1998, no. 03, 27. Februar 1998 (1998-02-27) -& JP 09 304702 A (OLYMPUS OPTICAL CO LTD), 28. November 1997 (1997-11-28)
- PATENT ABSTRACTS OF JAPAN vol. 1998, no. 10, 31. August 1998 (1998-08-31) & JP 10 123426 A (NIKON CORP), 15. Mai 1998 (1998-05-15)

## Beschreibung

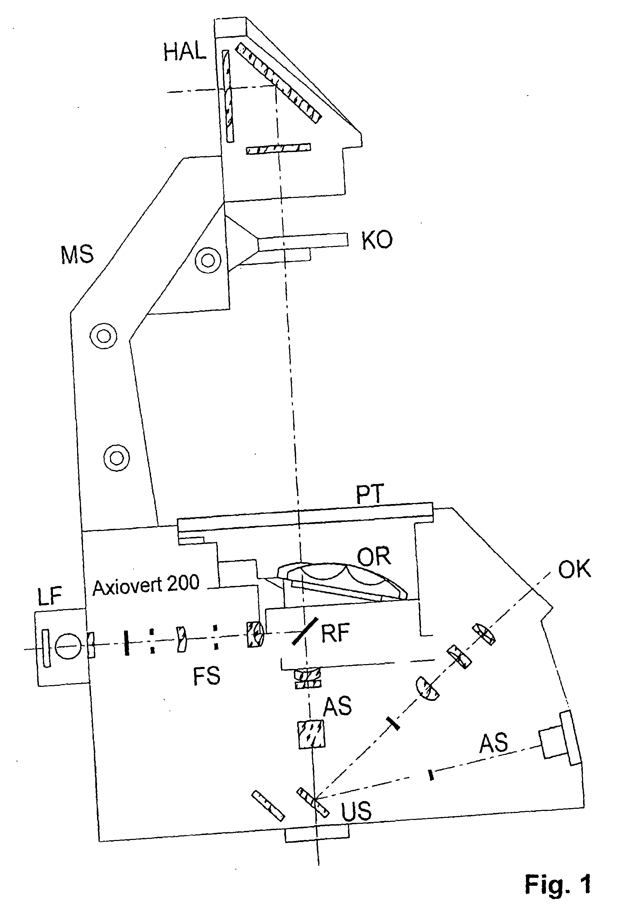

Die Erfindung betrifft eine Schutzvorrichtung gegen Feuchtigkeitseintritt in die unterhalb des Probentisches gelegenen Mikroskopteile eines inversen Mikroskops, insbesondere den Objektivrevolver sowie das Stativ, gemäß Anspruch 1. In der Abbildung 1 ist schematisch der Strahlengang eines inversen Mikroskopes dargestellt.

Eine Halogenlampe HAL am Mikroskopstativ MS beleuchtet über einen Kondensor KO ein auf dem Probentisch PT befindliches Objekt. Unterhalb des Probentisches befindet sich ein Objektivrevolver OR , hier ohne die einzusetzenden Objektive dargestellt, sowie ein Reflektor RF , der Teil eines nicht dargestellten Refektorrevolvers ist, zur einschaltbaren Einspiegelung eines Fluoreszenzanregungsstrahlengangs FS einer Lichtquelle LF.

Der Abbildungsstrahlengang AS wird über einen Umlenkspiegel US in Richtung des Okulares OK (nicht dargestellt) des Betrachters umgelenkt. Weiterhin ist ein Aufzeichnungsstrahlengang AS für fotografische Aufnahmen vorgesehen.

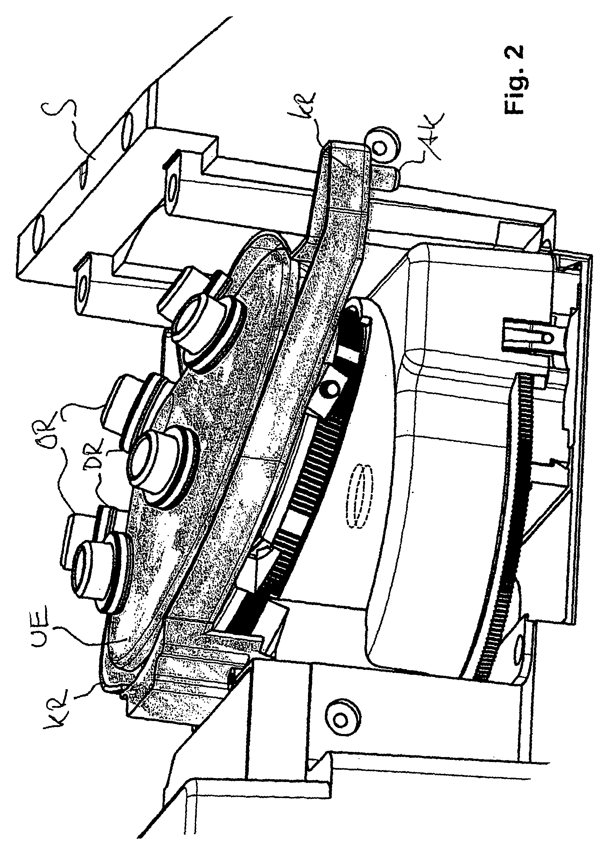

In Abbildung 2 ist das Stativ S sowie der Objektivrevolver OR eines inversen Mikroskops in einer Schrägansicht dargestellt. Der Probentisch ist hier nicht dargestellt.

Er weist beispielsweise eine nierenförmige Ausnehmung auf, um das ungehinderte Einschwenken der Objektive zu gewährleisten. Bei der Untersuchung flüssiger Proben, mit denen hantiert wird, ist es unvermeidlich, daß Probenflüssigkeit über den Rand des Probengefäßes herüberschwappt und über die Öffnung im Probentisch in den unteren Teil des Mikroskopes gelangt.

Die Japanische Offenlegungsschrift JP 09 304 702 beschreibt eine Schutzkappe für Objektive, die verhindert, daß Flüssigkeit in die Fassung der Objektivfrontlinse eindringen kann. Desweiteren wird eine Schutzmanschette um dem Objektivrumpf beschrieben, die verhindert daß Flüssigkeit in das Objektivanschraubgewinde eindringen kann.

Die Japanische Offenlegungsschrift JP 06 208 058 offenbart einen Aufsatz der auf die Spitze des Objektives aufgesetzt wird und eine gewisse Flüssigkeitsmenge aufnehmen kann.

Vorteilhaft ist nun für den Objektivrevolver ein flexibler Überzug UE aus Kunststoff oder Gummi oder Silikonmatte vorgesehen, der in seiner Form an die schalenförmige Form des Objektivrevolvers angepaßt ist. Hierdurch kann auf den Revolver gelangte Flüssigkeit weiter abfließen und bildet keine Rückstaus.

Er weist Möglichkeiten zum Ausbrechen von kreisförmigen Ausnehmungen mit mehreren an handelsübliche Objektive angepaßten Radien auf.

Zusätzlich können um die Objektivansätze herum elastische Dichtungsringe DR, beispielsweise aus Silikonmatte oder einer Gummiart wie Perbunan , form- und kraftschlüssig vorgesehen sein, die ein Durchfließen durch die Ränder des Überzugs UE verhindern.

Am Objektivrevolver ist weiterhin ein am Revolverträger befestigter Kragen KR vorgesehen, der mit dem Überzug kantengenau abschließt und eine umlaufende Rinne beinhaltet, in der herablaufende Flüssigkeit aufgefangen und damit vom Weiterlaufen auf das Stativ abgehalten wird.

Die Rinne weist mindestens einen Rohrstutzen mit Abflußkanal AK auf, der über einen Schlauch mit einem Sammelgefäß verbunden werden kann, um ablaufende Flüssigkeit abzufangen.

## Patentansprüche

1. Schutzvorrichtung gegen Feuchtigkeitseintritt in die unterhalb des Probentisches gelegenen Mikroskopteile bei einem inversen Mikroskop, mit einer der Form des Objektivrevolvers (OR) angepaßten, vorzugsweise elastischen, Abdeckung (UE) für den Objektivrevolver, wobei die Abdeckung mit Möglichkeiten zum Ausbrechen von Ausnehmungen für die Objektive mit mehreren an handelsübliche Objektive angepassten Radien sowie einer zumindest teilweise umlaufenden Rinne (KR) unterhalb der Abdeckung zum Auffangen von Flüssigkeit versehen ist.

2. Schutzvorrichtung nach Anspruch 1, wobei die Abdeckung (UE) und die Rinne (KR) zum Auswechseln der Abdeckung separate Bauteile sind.

3. Schutzvorrichtung nach Anspruch 1 oder 2 ,wobei die Rinne (KR) mindestens einen Ablaufstutzen (AK) für die Flüssigkeit aufweist.

4. Schutzvorrichtung nach Anspruch 1,2 oder 3, wobei zusätzlich zur Abdeckung an den Objektiven separate abnehmbare Dichtringe (DR) vorgesehen sind

## Claims

1. Protective device to prevent moisture from entering the microscope parts of an inverted microscope which are located beneath the specimen stage, said device having a preferably resilient cover (UE) for the objective turret which is adapted to the shape of the objective turret (OR), wherein the cover is provided with possibilities for breaking out recesses for the objectives with several radii adapted to commercially available objectives as well as an at least partially circumferential groove (KR) beneath the cover for collecting liquid.

2. Protective device as claimed in Claim 1, wherein the cover (UE) and the groove (KR) are separate components for replacing the cover.

3. Protective device as claimed in Claim 1 or 2, wherein the groove (KR) comprises at least one drain connection piece (AK) for the liquid.

4. Protective device as claimed in Claim 1, 2 or 3, wherein in addition to the cover, separate removable sealing rings (DR) are provided on the objectives

## Revendications

1. Dispositif de protection contre l'entrée d'humidité dans les parties de microscope situées en dessous de la platine d'échantillon dans un microscope inverse, avec un recouvrement (UE) de préférence élastique, adapté à la forme du revolver à objectifs (OR) pour le revolver à objectifs, où le recouvrement présente des possibilités pour casser des évidements pour les objectifs avec plusieurs rayons adaptés à des objectifs usuels dans le commerce et avec une rainure (KR) s'étendant au moins partiellement autour en dessous du recouvrement pour le recueillement de liquide.

2. Dispositif de protection selon la revendication 1, où le recouvrement (UE) et la rainure (KR), pour l'échange du recouvrement, sont des composants séparés.

3. Dispositif de protection selon la revendication 1 ou 2, où la rainure (KR) présente au moins une tubulure d'écoulement (AK) pour le liquide.

4. Dispositif de protection selon la revendication 1, 2 ou 3, où en plus du recouvrement, des bagues d'étanchéité (DR) pouvant être enlevées séparément sont prévues aux objectifs.
